# EUROPÄISCHE PATENTSCHRIFT

(11) **EP 1 293 416 B1**
(45) Veröffentlichungstag und Bekanntmachung des Hinweises auf die Patenterteilung: **10.01.2007**
(21) Anmeldenummer: 02019653.1
(22) Anmeldetag: 03.09.2002
(51) Int. Cl.: B62D 25/12

(54) **Anordnung einer Frontklappe an einem Fahrzeug**
Arrangement of the bonnet of a vehicle
Agencement d'un capot d'un véhicule

(30) Priorität: 12.09.2001 DE 10144792
(43) Veröffentlichungstag der Anmeldung: 19.03.2003
(73) Patentinhaber: Bayerische Motoren Werke Aktiengesellschaft, 80809 München (DE)
(72) Erfinder: Koestler, Ulrich, 85241 Hebertshausen (DE); Hiergeist, Christian, 94333 Geiselhöring (DE)

(56) Entgegenhaltungen:
- DE-A- 19 712 961
- DE-A- 19 922 454

## Beschreibung

Die Erfindung betrifft eine Anordnung einer Frontklappe an einem Fahrzeug, mit einer - in Fahrtrichtung betrachtet - hinten liegenden Scharniereinrichtung, nach dem Oberbegriff des Patentanspruchs 1.

Aus der DE 197 12 961 A1 ist bereits eine Anordnung einer Frontklappe an einem Fahrzeug bekannt, die über ein hinten liegendes Viergelenkscharnier an der Karosserie angelenkt ist. Im Falle einer Kollision des Fahrzeugs mit einem Fußgänger kann die Frontklappe im hinteren Bereich angehoben werden. Dazu wird das Viergelenk aus einer starren Anordnung aus einem kurzen und einem langen Lenker gebildet, wobei das karosserieseitige Gelenk des kurzen Lenkers unter der Last des Aufpralls des Fußgängers durch eine energiespeichernde Einrichtung in seiner Lage veränderbar ist.

Ferner ist aus der DE 199 48 459 A1 eine Fronthaubenanordnung bekannt, bei der eine Fronthaube eines Fahrzeugs über mindestens ein Mehrgelenkscharnier an den Rahmen des Fahrzeugs angelenkt und über wenigstens ein Haubenschloss verriegelbar ist. Wenigstens ein Gelenk eines Lenkers ist unter der Last eines Aufpralls eines Fußgängers an einem Teil der Fronthaube oder der Karosserie des Fahrzeugs in seiner Lage veränderbar. Das Mehrgelenkscharnier kann als Viergelenkscharnier ausgebildet sein.

Der Erfindung liegt die Aufgabe zugrunde, die bekannte Anordnung einer Frontklappe an ein Fahrzeug mit einem integrierten Fußgängerschutz weiterzubilden.

Diese Aufgabe wird durch die Merkmale des Patentanspruchs 1 gelöst.

Eine Frontklappe ist an einem Fahrzeug, mit mindestens einer - in Fahrtrichtung betrachtet - hinten liegenden Scharniereinrichtung angelenkt. Die Scharniereinrichtung ist einerseits an der Frontklappe und andererseits an der Karosserie angebracht, und die Frontklappe ist zum normalen Öffnen um diese Scharniereinrichtung verschwenkbar. Bei einer Kollision des Fahrzeugs mit einem Fußgänger hebt die Scharniereinrichtung die Frontklappe im hinteren Bereich an. Die Scharniereinrichtung ist ein Viergelenk, wobei ein karosserieseitiges Gelenk von einem der beiden Lenker unter der Last eines Aufpralls des Fußgängers durch eine energiespeichernden Einrichtung in seiner Lage veränderbar ist. Kerngedanke der Erfindung ist es, dass ein Führungslenker einerseits an dem verlagerbaren karosserieseitigen Gelenk des Lenkers und andererseits an der Karosserie angelenkt ist. Dadurch kann sich das in seiner Lage veränderbare Gelenk durch die energiespeichernde Einrichtung ausschließlich auf einer durch den Führungslenker vorgegebenen Kurvenbahn bewegt werden. Die radial auf die energiespeichernde Einrichtung wirkenden Kräfte reduzieren sich, da sie zumindest teilweise durch den Führungslenker abgeführt werden. Der maximal mögliche Verlagerungsweg des Gelenks ist durch den Führungslenker begrenzt. Dabei besteht das Viergelenk aus einem kurzen und einem langen Lenker und das verlagerbare Gelenk befindet sich am kurzen Lenker. Durch eine Verlagerung des karosserieseitigen Gelenks des kurzen Lenkers nach oben kann der benötigte Freiraum zwischen der Frontklappe und sich darunter befindenden Aggregaten und Gegenständen geschaffen werden, sodass sich die Fronthaube im nötigen Maße verformen kann, um den Aufprall eines Fußgängers weich abzufangen. Dies ist bei einem Viergelenkscharnier eine elegante Möglichkeit, mit wenig benötigtem Bauraum einen sehr wirkungsvollen Fußgängeraufprallschutz zu realisieren.

Weitere vorteilhafte Ausgestaltungen sind Gegenstand von Unteransprüchen.

Die Erfindung wird nachstehend unter Bezugnahme auf die anliegenden Figuren näher erläutert. Es zeigen in schematischer Darstellungsweise:
- Fig. 1: eine Prinzipskizze des Viergelenkscharniers in der geschlossenen Stellung,
- Fig. 2: das Viergelenkscharnier von Fig. 1 in der offenen Stellung und
- Fig. 3: das Viergelenkscharnier von Fig. 1 und Fig. 2 in der Stellung mit aktiviertem Fußgängeraufprallschutz.

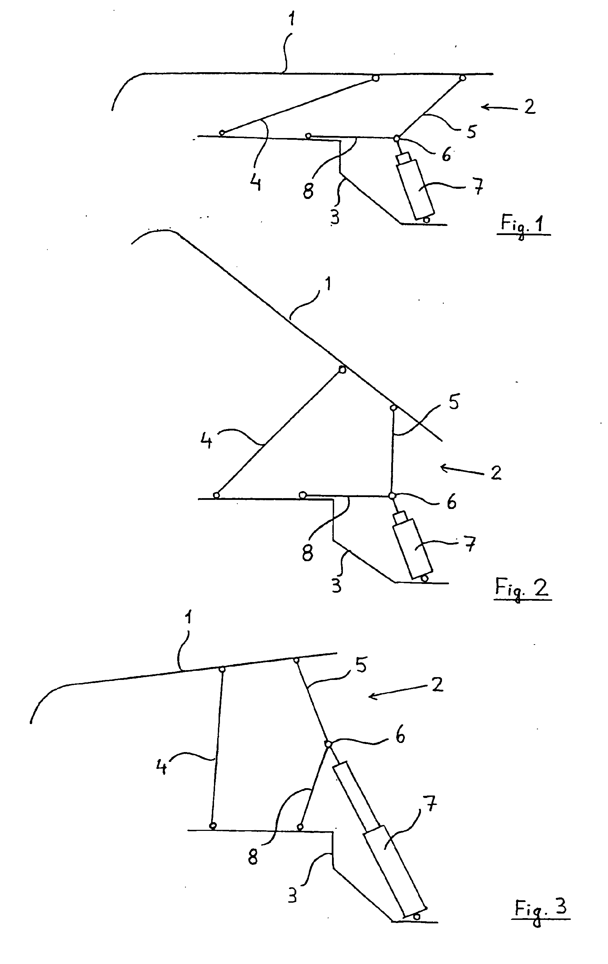

In Fig. 1 ist eine geschlossene Frontklappe 1 eines Kraftfahrzeugs dargestellt, die mit einem Viergelenkscharnier 2 an einer Karosserie 3 angelenkt ist. Das Viergelenkscharnier 2 besteht aus einem in Fahrtrichtung gesehen vorderen langen Lenker 4 und einem hinteren kurzen Lenker 5. Während der vordere lange Lenker 4 direkt an der Karosserie 3 angelenkt ist, ist der hintere kurze Lenker 5 über ein Gelenk 6 an einer energiespeichernden Einrichtung 7 angelenkt, die wiederum an die Karosserie 3 angelenkt ist. An dem Gelenk 6 ist außerdem ein Führungslenker 8 angelenkt, der mit seinem anderen Ende an die Karosserie 3 angelenkt ist.

Die in der Fig. 1 dargestellte energiespeichernde Einrichtung 7 weist in ihrer nicht aktivierten Lage eine feste Länge auf. Dazu kann auch eine hier nicht gezeigte zusätzliche Fixierung verwendet werden. Zusammen mit dem Führungslenker 8 bildet die energiespeichernde Einrichtung 7 somit eine starre Anordnung. Das Gelenk 6 ist somit in seiner Lage gegenüber der Karosserie 3 nicht veränderbar. Damit sind nur der lange und der kurze Lenker 4 und 5 beweglich. Über dieses Viergelenkscharnier 2 lässt sich die Frontklappe 1 normal öffnen. In Fig. 2 ist die Fronthaube 1 in der geöffneten Stellung dargestellt.

Die in den Fig. 1 und 2 dargestellte Anordnung einer Fronthaube 1 weist über die bereits beschriebenen Standardfunktionen einen Fußgängeraufprallschutz auf. Diese funktioniert folgendermaßen: Wenn ein Aufprall eines Fußgängers detektiert wird, wird die energiespeichernde Einrichtung 7 ausgelöst. Diese verlängert sich dann schlagartig teleskopisch, wie es in Fig. 3 gezeigt ist. Dazu kann die energiespeichernde Einrichtung 7 beispielsweise eine vorgespannte Druckfeder oder eine Gasdruckfeder enthalten, in deren einer Luftkammer wie bei einem Airbag eine kleine pyrotechnische Patrone zum Auslösen gezündet wird. Die Bewegungsbahn des Gelenks 6 ist dabei durch den Führungslenker 8 genau definiert. Durch die Verlagerung des Gelenks 6 und damit des kurzen Lenkers 5 verlagert sich auch die Fronthaube 1. Diese Verlagerung der Fronthaube 1 nach oben erfolgt ebenfalls in eine vorgegebene Stellung, die durch das Viergelenkscharnier 2 festgelegt ist. Beim Anheben der Fronthaube 1 entsteht ein etwas größerer Abstand zwischen der Fronthaube 1 und den darunter angeordneten Gegenständen und Aggregaten. Dieser Abstand reicht als Umformweg aus, um den Aufprall eines Fußgängers so weich abzufangen, dass sich die Verletzungsgefahr des Fußgängers deutlich reduziert.

Ohne den Führungslenker 8 wäre das Gelenk 6, wenn die energiespeichernde Einrichtung 6 ausgelöst ist, nicht mehr geführt. Die Frontklappe 1 könnte eine ganze Reihe undefinierter Positionen einnehmen, von denen bei weitem nicht alle einen optimalen Schutz für einen Fußgänger sicherstellen würden. Erst durch den Führungslenker 8, der, wenn die energiespeichernde Einrichtung 6 ausgelöst ist, quasi den kurzen Lenker 5 verlängert, kann die Fronthaube 1 mit Sicherheit eine zum Dämpfen des Aufpralls eines Fußgängers optimale Stellung einnehmen.

Aufgrund der einfachen und stabilen Anordnung der Frontklappe 1 an der Karosserie 3 ist die Anordnung kostengünstig herstellbar. Die Anordnung kann wie bei konventionellen Anordnungen ohne Fußgängerschutz im Rohbau verbaut und justiert werden. Es sind keine Nacharbeiten nach dem Lackieren der Rohkarosserie oder während der späteren Montage erforderlich.

## Patentansprüche

1. Anordnung einer Frontklappe an einem Fahrzeug, mit mindestens einer - in Fahrtrichtung betrachtet - hinten liegenden Scharniereinrichtung, die einerseits an der Frontklappe und andererseits an der Karosserie angebracht ist, und um die die Frontklappe zum normalen Öffnen verschwenkbar ist, und die bei einer Kollision des Fahrzeugs mit einem Fußgänger die Frontklappe im hinteren Bereich anhebt, wobei die Scharniereinrichtung in nicht aktivierter Lage eine Anordnung in der Form eines Viergelenks aus einem kurzen und einem langen Lenker ist dessen karosserieseitigen Gelenke in ihrer Lage unveränderbar sind, und ein karosserieseitiges Gelenk des kurzen Lenkers unter der Last eines Aufpralls des Fußgängers durch eine energiespeichernden Einrichtung in seiner Lage veränderbar ist, **dadurch gekennzeichnet, dass** ein Führungslenker (8) vorgesehen ist, der einerseits an dem einzig verlagerbaren karosserieseitigen Gelenk (6) des Lenkers (5) und andererseits an der Karosserie (3) angelenkt ist.

2. Anordnung einer Frontklappe nach Anspruch 1, **dadurch gekennzeichnet, dass** die energiespeichernde Einrichtung (7) eine mechanische Feder und / oder eine Gasfeder aufweist.

3. Anordnung einer Frontklappe nach Anspruch 1, **dadurch gekennzeichnet, dass** die energiespeichernde Einrichtung (7) eine pyrotechnische Einrichtung ist.

## Claims

1. An arrangement of a bonnet on a vehicle, with at least one - viewed in the direction of travel - rear hinge means which is attached, on the one hand, to the bonnet and, on the other hand, to the bodywork and about which the bonnet may be swivelled for normal opening and which raises the bonnet in the rear region in the event of the vehicle colliding with a pedestrian, the hinge means being in the non-activated position an arrangement in the form of a four-bar mechanism comprising a short and a long guide, the positions of the bodywork-side joints of which are unchangeable, and the position of a bodywork-side joint of the short guide may be changed by an energy accumulator under the load of an impact of the pedestrian, **characterised in that** there is provided a steering guide (8) articulated, on the one hand, to the single displaceable bodywork-side joint (6) of the guide (5) and, on the other hand, to the bodywork (3).

2. An arrangement of a bonnet according to claim 1, **characterised in that** the energy accumulator (7) comprises a mechanical spring and/or a gas spring.

3. An arrangement of a bonnet according to claim 1, **characterised in that** the energy accumulator (7) is a pyrotechnic means.

## Revendications

1. Agencement du capot d'un véhicule, comportant au moins un dispositif à charnière situé à l'arrière (vu dans le sens de la marche) qui est mis en place d'un côté sur le capot et d'un autre côté sur la carrosserie et autour duquel le capot pivote en vue de son ouverture normale, et qui en cas de collision avec un piéton relève le capot dans la zone postérieure,
le dispositif à charnière, en position non activée, constituant un agencement sous la forme d'une articulation quadruple faite d'une bielle courte et d'une bielle longue, dont les articulations situées du côté de la carrosserie sont fixes en position, et une articulation de la bielle courte se situant du côté de la carrosserie, est variable en position sous la charge d'un impact du piéton grâce à un dispositif accumulant de l'énergie,
**caractérisé en ce qu'**
une bielle de poussée (8) est articulée d'un côté à l'unique articulation située du côté de la carrosserie et déplaçable (6) de la bielle (5) et d'un autre côté à la carrosserie (3).

2. Agencement d'un capot selon la revendication 1,
**caractérisé en ce que**
le dispositif accumulant de l'énergie (7) comporte un ressort mécanique et/ou un ressort à gaz.

3. Agencement d'un capot selon la revendication 1,
**caractérisé en ce que**
le dispositif accumulant de l'énergie (7) est un dispositif pyrotechnique.
